# EUROPÄISCHE PATENTSCHRIFT

(11) **EP 1 832 415 B1**
(45) Veröffentlichungstag und Bekanntmachung des Hinweises auf die Patenterteilung: **04.05.2011**
(21) Anmeldenummer: 07103719.6
(22) Anmeldetag: 07.03.2007
(51) Int. Cl.: B32B 27/18, B32B 33/00

(54) **Kunststoffverbund**
Plastic composite
Matière plastique composite

(30) Priorität: 07.03.2006 DE 102006011436
(43) Veröffentlichungstag der Anmeldung: 12.09.2007
(73) Patentinhaber: Wagner-Quinte, Sibylle, 10719 Berlin (DE)
(72) Erfinder: Wagner-Quinte, Sibylle, 10719 Berlin (DE)
(74) Vertreter: Kilger, Ute

(56) Entgegenhaltungen:
- EP-A- 0 228 041
- WO-A-00/24580
- AU-A- 2 924 884
- DE-A1- 10 244 706
- DE-U1- 9 216 001
- GB-A- 1 429 597
- US-A- 5 618 626
- US-B1- 6 514 594

## Beschreibung

Die vorliegende Erfindung betrifft Kunststoffverbünde bestehend aus Kunststoffschichten, insbesondere einer ersten Kunststoffschicht (A) bestehend aus einem transparenten farblosen Kunststoff, einer zweiten Kunststoffschicht (B) bestehend aus einem transparenten Kunststoff enthaltend einen löslichen Fluoreszenzfarbstoff und einer weiteren dritten Schicht (C), ausgewählt aus einer (i) reflektierenden Schicht (C1), einer (ii) Kunststoffschicht (C2) bestehend aus einem transparenten farblosen Kunststoff, oder optional einer (iii) Lackschicht (C3), wobei die Schichten in der genannten Reihenfolge (A), (B) und (C) verbunden sind und die Kunststoffschichten (A) und (B) sowie optional (C) im wesentlichen für das Auge blasenfrei miteinander durch Heißverklebung fest verbunden sind.

### Stand der Technik

Für verschiedene Zwecke, beispielsweise zur Herstellung von Beleuchtungskörpern, Möbeln, Designermöbeln, insbesondere für Wolmungsgegenstände aller Art werden Kunststoffe mit hoher Farbbrillanz verwendet.

So beschreibt DE 102 44 706 A1 Formkörper aus einer Kunststoff-Matrix aus einem transparenten Kunststoff, enthaltend einen löslichen Fluoreszenzfarbstoff und einem Streumittel mit einem Brechungsindex von +/- 0,003 bis 0,2 zur Kunststoffmatrix, dadurch gekennzeichnet, dass zusätzlich bestimmte Weißpigmente zugegeben sind. Hier liegt die Aufgabe zugrunde, die Farbbrillanz zu steigern beziehungsweise bestimmte Farbeffekte zu erzielen.

Bekannt ist weiterhin die Verwendung von fluoreszenten Farbstoffen in Kunststoffen. So werden in Kunststoff fluoreszente Farbstoffe wie Lumogen F Orange 240, Lumogen F Gelb 083, Lumogen F Rot 305 oder Hostasol Gelb 3G verwendet. Derlei Kunststoffe haben ein homogenfluoreszierendes Erscheinungsbild. Alle vorgenannten Farbstoffe gehören zu der Kunststoffsorte Plexiglas ® Fluorescent der Firma Röhm GmbH & Co. KG, Plexiglas ® ist eine eingetragene Marke.

In der japanischen Offenlegungsschrift JP-A-418346 werden Licht-streuende Mehrschichtplatten mit einer Schicht aus Methylmethacrylat beschrieben, welche 1-2 Gew.% vernetzte Styrolpartikel mit einer mittleren Partikelgröße von 1 bis 30 µm enthält.

Der Stand der Technik kennt verschiedenste Methoden, um zu gleichmäßig ausgeleuchteten Lichtleiterplatten zu kommen. Bei diesen Methoden wird die Farbbrillanz nicht durch Einbringung von chemischen Substanzen erzielt, sondern durch zusätzliches Einleiten von Licht in die Vorrichtung. EP-A-533 301 beschreibt beispielsweise scheibenförmige Lichtverteilungskörper aus Licht-streuenden und transparentem Material, wobei die Abstrahlfläche und/oder die dieser entgegengesetzte Fläche ganzflächig oder teilflächig eine zumindest teilweise reflektierende, die Totalreflektion-unterbrechende Beschichtung, Kaschierung, Aufrauung oder Struktur zur Verbesserung der aktiven Lichtverteilung im Lichtverteilungskörper aufweist. Kennzeichnendes Merkmal dieser Vorrichtung ist die Einbringung von Licht, die wiederum zu einer Brillanzsteigerung führt. Somit kennt der Stand der Technik grundsätzlich Kunststoffmatrizes, die verschiedenste Licht-streuende oder fluoreszierende chemische Agenzien enthalten beziehungsweise auf der anderen Seite Kunststoffanordnungen, die zusätzliche Brillanz dadurch enthalten, dass aktiv Licht eingeleitet wird.

Die DE-GBM-8913036 beinhaltet Lichtleiterplatten, in die über eine glatte Randfläche Licht einer Lichtquelle eingekoppelt wird, dass die Lichtleiterplatte unsichtbar durchflutet und im Bereich von rauen Ornamentflächen der Lichtleiterplatte durch Lichtbrechung sichtbar wird. Für die oben genannten Anwendungen wäre es vorteilhaft ein Kunststoffverbund bereitstellen zu können, der gekennzeichnet ist durch eine erhöhte farbliche Brillanz, mit unter an definierten Stellen, der jedoch keine aktive Einbringung von Licht benötigt, der einfach in der Herstellung ist, sparsam mit fluoreszenten oder anderen Farbstoffen umgeht und leicht verarbeitet werden kann.

### Aufgabe und Lösung

Aus dem Stand der Technik ist kein Kunststoffverbund bekannt, der die vorstehend beschriebene Anforderung in ausreichendem Maß erfüllt. In Anbetracht der zuvor angegebenen und diskutierten Probleme des Standes der Technik bestand eine Aufgabe der vorliegenden Erfindung darin, einen Kunststoffverbund bereit zu stellen, der geprägt ist durch definierbare und hohe farbliche Brillanz.

Die Erfindung betrifft einen Kunststoffverbund, mit den folgend genannten Schichten, einer ersten Kunststoffschicht (A) aus einem transparenten, farblosen Kunststoff, welcher mindestens 40% Transmission im sichtbaren Bereich aufweist, ausgewählt aus der Gruppe umfassend extrudierter Polymethylmethacrylat-Kunststoff, gegossener Polymethylmethacrylat-Kunststoff, schlagzählmodifizierter Polymethylmethacrylat-Kunststoff, Polycarbonat-Kunststoff, Polystyrol-Kunststoff, Styrol-Acryl-Nitril-Kunststoff, Polyethylenterephthalat-Kunststoff, glykolmodifizierter Polyethyleneterephthalat-Kunststoff, Polyvinylchlorid-Kunststoff, transparenter Polyolefin-Kunststoff, Acrylnitril-butadien-Styrol(ABS)-Kunststoff und eine Mischung (Blend) der genannten Kunststoffe,einer zweiten Kunststoffschicht (B) aus einem transparenten Kunststoff ausgewählt aus der Gruppe umfassend extrudierter Polymethylmethacrylat-Kunststoff, gegossener Polymethylmethacrylat-Kunststoff, schlagzählmodifizierter Polymethylmethacrylat-Kunststoff, Polycarbonat-Kunststoff, Polystyrol-Kunststoff, Styrol-Acryl-Nitril-Kunststoff, Polyethylenterephthalat-Kunststoff, glykolmodifizierter Polyethyleneterephthalat-Kunststoff, Polyvinylchlorid-Kunststoff, transparenter Polyolefin-Kunststoff, Acrylnitril-butadien-Styrol(ABS)-Kunststoff und eine Mischung (Blend) der genannten Kunststoffe, enthaltend einen Fluoreszenzfarbstoff und einer weiteren Schicht (C), ausgewählt aus (i) einer reflektierenden Schicht (C1), (ii) ausgewählt aus der Gruppe umfassend eine weiße Farbschicht, eine metallische Schicht und eine Spiegelschicht, einer Kunststoff-Schicht (C2) bestehend aus einem transparenten, farblosen Kunststoff, welcher mindestens 40% Transmission im sichtbaren Bereich aufweist und (iii) einer Lackschicht (C3), wobei die Schichten in der Reihenfolge (A), (B) und (C) verbunden sind und je nach Auswahl der dritten Schicht (C), (C1) direkt auf (B) aufgetragen ist und zwar, auf die der Kunststoffschicht (A) abgewandten Seite, oder (C2) bevorzugt im wesentlichen für das Auge blasenfrei mit (B) durch Verklebung fest verbunden ist oder (C3) direkt auf (B) aufgetragen ist und zwar auf die der Kunststoffschicht (A) abgewandten Seite, wobei im Kunststoffverbund gemäß Ausführungsform (ii) die äußeren Kunststoffschichten (A) und (C2) eine Dicke von mehr als 2mm aufweisen, und wobei im Kunststoffverbund gemäß Ausführungsform (ii) die mittlere Kunststoffschicht (B) eine Dicke von mehr als 0,2 mm aufweist, und wobei die Kunststoffschichten (A) und (C) dicker sind als die Kunststoffschicht (B)..

In einer besonderen Ausführungsform sind die Kunststoffschichten (A) und (B), im Wesentlichen für das Auge blasenfrei miteinander durch Verklebung fest verbunden.

Der Kunststoffverbund weist durch die erfindungsgemäße Schichtung im Bereich der Schicht (B) eine besondere Farbintensität bzw. Farbbrillanz aus. Je nach Blickwinkel leuchtet insbesondere die Schicht (B) in einer Weise, die für den Betrachter den Eindruck erweckt als ob mittels einer besonderen Beleuchtungsvorrichtung beispielsweise mittels LEDs Licht in die Kunststoffsclaichten eingebracht worden wäre oder Licht aus der Kunststoffschicht heraus kommt. Aus anderen Blickwinkeln wird für den Betrachter der Eindruck erweckt, als ob jede dieser Schichten mittels einer besonderen Beleuchtungsvorrichtung Licht ausstrahlt. Dies ist vorliegend nicht der Fall. Naturgemäß ist der zu beobachtende Lichteffekt und die zu beobachtende Farbbrillanz grundsätzlich davon abhängig, dass per se Licht vorhanden ist. Dieses Licht muss jedoch nicht direkt an einer bestimmten Stelle in den Formkörper eingebracht werden. Kennzeichnend für die Erfindung ist daher, dass die erfindungsgemäße Schichtung zu besonderer Farbbrillanz an bestimmte Stellen führt, die erfindungsgemäß bestimmte Verwendungen, die unten näher genannt werden ermöglichen. Schon wenig Umgebungslicht ist ausreichend, um den genannten Effekt zu erzielen.

In einer besonderen Ausführungsform ist die reflektierende Schicht der weiteren Schicht (C) ausgewählt aus der Gruppe umfassend, eine weiße Farbschicht, eine metallische Schicht und eine Spiegelschicht, Fotos wahlweise auf Papier, kunststaflhaltigern Papier oder sonstigen Folien mit der Maßgabe, dass diese entsprechende weiße Flächen und/oder entsprechende Helligkeitsstufen aufweisen, Wie bereits oben beschrieben kann die weitere dritte Schicht (C) ausgewählt sein aus einer (i) reflektierenden Schicht (C1), einer (ii) Kunststoffschicht (C2) und einer (iii) Lackschicht (C3). Je nach Verwendung, ob beispielsweise eine Verwendung angestrebt ist im Designbereich oder aber im Möbelbereich kann es sinnvoll sein, die dritte Schicht (C) materialmäßig zu variieren. Die Erfinder haben festgestellt, dass diese dritte Schicht jedoch bevorzugt ausgewählt ist, aus der oben genannten Gruppe. Nicht alle Materialien eignen sich als dritte Schicht (C). Sofern es sich bei der dritten Schicht, um eine reflektierende Schicht handelt, wird weiß als Farbschicht bevorzugt. Besonders bevorzugt ist reinweiß. Die Erfinder haben festgestellt, dass die Farbbrillanz mit der Reinheit des Weißes zunimmt.

Besonders überraschend war die Brillanz der Farbe und die Farbintensität, wenn der oben genannte Kunststoffverbund eine Kunststoff Schicht (C2) aufweist bestehend aus einem transparenten, farblosen Kunststoff, welcher mindestens 40% Transmission im sichtbaren Bereich aufweißt. Diese Ausführungsform eignet sich insbesondere gut für die Verwendung bei Möbeln und anderen dreidimensionalen Objekten.

In einer Ausführungsform weisen die Kunststoffschichten (A) und (C2) eine größere Dicke auf, als die fluoreszierende Schicht (B). Bevorzugterweise haben die Kunststoffschichten (A) und (C2) dabei eine Dicke zwischen 2 mm und 3 cm, wobei die zweite fluoreszierende Kunststoffschicht (B) eine geringere Dicke zwischen 0,2 und 6 mm, bevorzugt 3 mm und 6 mm aufweist. Die Erfinder haben festgestellt, dass die Verhältnisse der Kunststoffe zueinander einen Einfluss auf die Farbbrillanz der Mittelschicht haben. So ist es bevorzugt, dass die außenständigen Kunststoffschichten dicker sind als die fluoreszierende Mittelschicht. Werden die Kunststoffschichten im Bereich der Architektur eingesetzt, dann werden die Dimensionen entsprechend um ein Vielfaches größer. Das heißt, bevorzugt haben die Kunststoffschichten (A) und (C2) eine Dicke von größer als 2 mm, und die fluoreszierende Kunststoffschicht hat eine Dicke größer als 0,2 mm, besonders bevorzugt größer als 3 mm.

Ausgewählt aus der Gruppe umfassend extrudierter Polymethylmethacrylat-Kunststoff, gegossener Polymethylmethacrylat-Kunststoff, schlagzählmodifizierter Polymethylmethacrylat-Kunststoff, Polycarbonat-Kunststoff, Polystyrol-Kunststoff, Styrol-Acryl-Nitril-Kunststoff, Polyethylenterephthalat-Kunststoff, glykolmodifizierter Polyethyleneterephthalat-Kunststoff, Polyvinylchlorid-Kunststoff, transparenter Polyolefin-Kunststoff, Acrylnitril-butadien-Styrol(ABS)-Kunststoff und eine Mischung (Blend) der genannten Kunststoffe.

In einer weiteren Ausführungsform handelt es sich bei der Kunststoffschicht (A) um einen hochtransparenten Kunststoff. In einer bevorzugten Ausführungsform hat dieser hochtransparente Kunststoff eine Transmission von mehr als 80%. Hochtransparente Kunststoffe wie sie beispielsweise angewandt werden können, werden in DE 102 52 006 A1 beschrieben. Gemäß einem Aspekt der vorliegende Erfindung hat die Kunststoffschicht (A) bei einer Schichtdicke von 3 mm eine Lichttransmission von größer oder gleich 25%, insbesondere 40% und besonders bevorzugt größer oder gleich 50%, am bevorzugtesten größer oder gleich 80%.

Der hochtransparente Kunststoff der Kunststoffschicht (A) besteht erfindungsgemäß aus einer Formmasse, die eine Bruchspannung von größer gleich 75 MPa gemäß ISO 527 (5 mm/min) und damit hohe Steifigkeit besitzt. Die Formmasse der vorliegenden Kunststoffschicht (A) wird vorzugsweise durch thermoplastische Formgebungsverfahren, wie Spritzgießen oder Extrusion verarbeitet. Die Transmission (D65/2%) kann gemäß DIN 5036 mit einem Messgerät Lambda 19 der Firma Perkin-Elmer bestimmt werden. Der Gelbwert D65/10% kann gemäß DIN 6167 mit einem Messgerät Lambda 19 der Firma Perkin-Elmer bestimmt werden.

Die Kunststoffschicht (B) besteht aus einem transparenten Kunststoff, welcher einen löslichen Fluoreszenzfarbstoff enthält. Solche Kunststoffe sind in DE 102 44 706 beschrieben. Fluoreszenzfarbstoffe für Kunststoffschicht (B) werden beschrieben in WO 99/16847. Die Kunststoffschicht (B) besteht zum Beispiel aus Polycarbonat, polymethylmethacrylat, Polyvinylidinfluorid oder Mischungen aus Polymethylmethacrylat und Polyvinylidinfluorid. Bei den Fluoreszenzfarbstoffen handelt es sich beispielsweise um Mischungen aus N,N'-disubstituierten 3,4:9,10 Perylen (bis)dicarboxymid) und gelbfluoreszierenden Farbstoffen mit definierten Farbkoordinatenbereichen gemäß dem CIE 1931 Standard, kolorimetrischen System und Fluoreszenz-Lumineszenz-Faktoren größer 5. Geeignet für die Kunststoffschicht (B) sind Kunststoffe, welche handelsübliche Fluoreszenzfarbstoffe, die beispielsweise Lumogen^{®} F Orange 240, Lumogen^{®} F Gelb 083, Lumogen^{®} F Rot 240 beinhalten. Lumogen^{®} sind eingetragene Marken der BASF AG, Ludwigshafen, Deutschland. Als Fluoreszenzfarbstoff anwendbar ist auch Hostasol^{®} Gelb 3G. Wesentlich für die vorliegende Erfindung ist eine gewisse Transmissionseigenschaft der Kunststoffschicht (B). Die Fluoreszenzfarbstoffe liegen vorzugsweise nicht in Kombination mit weiteren Farbmitteln vor, da dies die Transmissions-eigenschaften nachteilig beeinflussen könnte. Weitere Farbmittel können vorkommen, sofern diese die Transmissionseigenschaften nicht nachteilig beeinflussen. Weitere Farbmittel werden in DE 102 44 706 auf Seite 2 im letzten Absatz genannte. Besonders bevorzugte Kunststoffschichten (B) sind jene, die die Firma Röhm GmbH & Co. KG unter dem Markennamen "Plexiglas®" vertreibt. Insbesondere jene, die unter dem Namen "Plexiglas® Fluorescent" vertrieben werden.

Wie oben ausgeführt, kann die dritte Schicht (C) eine Lackschicht (C3) sein. Die erfindungsgemäße Lackschicht hat eine gewisse Transparenz. Im Gegensatz zur Kunststoffschicht (C2) ermöglich die Lackschicht das Aufbringen von Strukturmerkmalen in die dritte Schicht (C). Weiter ermöglicht die Lackschicht (C3) eine erleichterte partielle Beschichtung der zweiten Kunststoffschicht (B). Eine Lackschicht kann beispielsweise sein, eine Acryllackschicht, eine Kunstharzlackschicht, eine H₂O-lösliche Lackschicht oder eine Lackschicht bestehend aus einem transparenten Kleber. Ein solcher transparenter Kleber kann zum Beispiel der unter dem Markenname "UHU" erhältliche Kleber sein. Bevorzugt wird der Kunstharzlack. Erfindungsgemäß kann die Schicht in Teilen auf die Kunststoffschicht (B) aufgebracht werden oder aber im Ganzen die Kunststoffschicht (B) bedecken. Die Lackschicht (C3) kann musterförmig auf die Kunststoffschicht (B) aufgebracht werden oder ohne wiederkehrendes Muster. Insbesondere bevorzugt ist, wenn diese Lackschicht im Sprühvorgang aufgebracht wird, so dass der "Abfall" des Sprühprozesses (das "Verwehte") die diffuse Lichtwirkung auslöst.

In einer Ausführungsform der vorliegenden Erfindung handelt es sich bei der Kunststoffschicht (C) um eine reflektierende Schicht (C2). In einer bevorzugten Ausführungsform ist diese reflektierende Schicht (C2) eine weiße Farbschicht und der weiße Pigmentanteil ist hoch. Dieser weiße Pigmentanteil kann mittels TiO₂, ZnO, ZnS oder Bariumsulfat herbeigeführt werden. Bevorzugte weiße Farben sind Acryllack, Kunstharzlack, wasserlösliche Farbe wie Dispersionsfarbe, Aquarellfarbe, Fettkreide, Tempera, selbst gemischte Farbe wie Ei/Öl/Terpentin/Pigment oder Ölfarbe der Fa Newton oder ähnliche wie z.B. Zinkweiß(Zn0)]. Besondere Brillanz- und Lichteffekte lassen sich dadurch erzielen, dass die Kunststoffschicht (B) an wenigstens einer Stelle an der Grenze zur Kunststoffschicht (C) einen von der übrigen Fläche unterschiedlichen Brechungsindex aufweist. Dies lässt sich durch aufrauen oder aufkratzen der Kunststoffschicht (B) an der Grenze zur Schicht (C) bewerkstelligen.

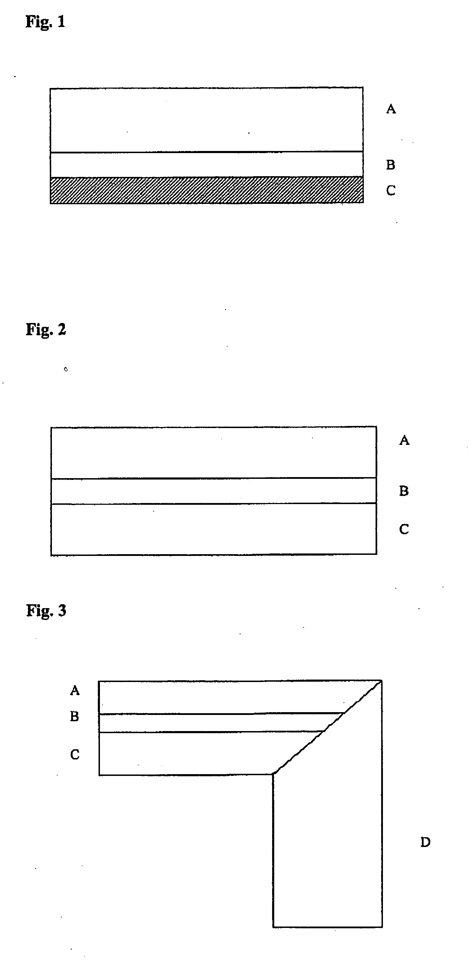

Erfindungsgemäße Ausführungsformen des Kunststoffverbundes werden in Figur 1, Figur 2 und Figur 3 gezeigt. Bei der Figur 1 handelt es sich bei der Schicht (C) um eine reflektierende Schicht (C1) oder eine Lackschicht (C3). Die erfindungsgemäße Farbbrillanz zeigt sich für den Betrachter auf unterschiedliche Weise. Blickt der Betrachter nur auf die Kunststoffschicht (A), d.h. aus einem Blickwinkel, der optisch die Kunststoffschicht (B) sowie die dritte Schicht (C) Licht-zugänglich macht, so erscheint die Schicht (A) in der Farbe, in der die Schicht die fluoreszente Schicht (B) gestaltet ist.

Von der vorliegenden Erfindung sind auch Ausführungsformen umfasst, bei denen die Kunststoffschicht A beispielsweise aus mehreren gleichen Kunststoffschichten zusammengesetzt beziehungsweise gemeinsam verklebt werden. Vorstellbar wäre auch eine beliebige Wiederholung der Schichten beispielsweise Schichtenfolge ABABA.

In einer Ausführungsform der Erfindung werden die Kunststoffschichten miteinander verklebt. Geeigneter Klebstoffe sind dem Fachmann bekannt. Die Verklebung soll im Wesentlichen für das Auge blasenfrei erfolgen. Dies kann durch dem Fachmann bekannte Verfahren erreicht werden. Geeignete Klebstoffe und Verfahren zur Verklebung von Kunststoffschichten sind beispielsweise aus der Offenlegungsschrift DE 102 33 684 bekannt. Ab bevorzugsten sind Klebstoffe, die nach Verarbeitung hochtransparent und blasenfrei die Kunststoffschichten miteinander verbinden ohne selbst sichtbar zu sein. Des Weiteren werden geeignete Kunststoffe in der vorbenannten Offenlegungsschrift benannt. Am bevorzugsten sind die Kunststoffe Polyacrylate, unter dem Handelsnamen ®Plexiglass von der Fa. Röhm GmbH kommerziell erhältlich. Die Kunststoffplaiten, deren Eigenschaften und Ausführungsformen sind beschrieben in DE 102 33 684.

Bei der Verwendung solcher Kunststoffschichten in Bildern, können die Kunststoffschichten auch unverklebt aneinandergepresst werden und werden dann durch die Rahmung gehalten.

Figur 1 zeigt eine Ausführungsform der Erfindung, bei der die dritte Schicht (C) über die gesamte Fläche der Schicht (B) ausgestaltet ist. Vorstellbar ist jedoch auch, dass die dritte Schicht nur in Teilen hinter bzw. auf der Schicht (B) liegt. Bevorzugt wird, dass die dritte Schicht (C) über die gesamte Fläche der Schicht (B) vorhanden ist,

Figur 2 zeigt eine Ausführungsform, bei der die dritte Schicht (C) eine Kunststoffschicht (C2) ist. Bei dieser Kunststoffschicht (C2) handelt es sich um eine transparente farblose Kunststoffschicht, die mindestens 40% Transmission im sichtbaren Bereich aufweist. Besonders bevorzugt ist, wenn diese Transmission mehr als 80% aufweist.

Die Figur 3 zeigt eine Ausführungsform wie sie beispielsweise für Designermöbel oder andere dreidimensionale Objekte zur Anwendung kommen kann. Hier wird der erfinderische Kunststoffverbund über Gärung verbunden mit einem Kunststoff (D), welcher gleichermaßen hochtransparent ist. In dieser Ausführungsform kann die erfindungsgemäße brillante Kunststoffverbundanordnung mit einem gänzlich transparenten Teil so verbunden werden, dass der Betrachter den Eindruck hat, dass in Teilen die farbliche Brillanz sich im Kunststoffteil (D) wieder findet. Bei dieser Ausführungsform, die insbesondere für Möbel bevorzugt ist, kann (D) ein farbloses transparentes Teil sein oder aber ein gefärbtes Kunststoffteil. Der erfindungsgemäße Kunststoffverbund findet Anwendung für Fahrzeugkarosserien, Designermöbel, Hinweisschilder oder Teilen davon, Beleuchtungstechnik, Lichtwerbeanlagen, Wintergärten, Aquarien, Möbel und Accessoires, Duschkabinen, Bildverglasung und Architektur. Bevorzugt wird die Verwendung des erfindungsgemäßen Kunststoffverbundes für Möbel. Der erfindungsgemäße Kunststoffverbund kann jedoch auch für Kunstgegenstände Anwendung finden. Die Figur 3 zeigt eine Ausführungsform, bei der der erfindungsgemäße Kunststoffverbund verklebt wurde, einem weiteren Material (D), bei diesem weiteren Material kann es sich handeln, um einen weiteren Kunststoff oder um ein anderes transparentes Material. Bevorzugt ist dieses weitere Material der gleiche Kunststoff wie jener der Schicht (A).

## Patentansprüche

1. Kunststoffverbund, mit den folgend genannten Schichten, einer ersten Kunststoffschicht (A) aus einem transparenten, farblosen Kunststoff, welcher mindestens 40% Transmission im sichtbaren Bereich aufweist, ausgewählt aus der Gruppe umfassend extrudierter Polymethylmethacrylat-Kunststoff, gegossener Polymethylmethacrylat-Kunststoff, schlagzäh modifizierter Polymethylmethacrylat-Kunststoff, Polycarbonat-Kunststoff, Polystyrol-Kunststoff, Styrol-Acryl-Nitril-Kunststoff, Polyethyleneterephthalat-Kunststoff, glykolmodifizierter Polyethyleneterephathalat-Kunststoff, Polyvinylchlorid-Kunststoff, transparenter Polyolefin-Kunststoff, Acrylnitril-Butadien-Styrol(ABS)-Kunststoff und eine Mischung (Blend) der genannten Kunststoffe, einer zweiten Kunststoffschicht (B) aus einem transparenten Kunststoff ausgewählt aus der Gruppe umfassend extrudierter Polymethylmethacrylat-Kunststoff, gegossener Polymethylmethacrylat-Kunststoff, schlagzäh modifizierter Polymethylmethacrylat-Kunststoff, Polycarbonat-Kunststoff, Polystyrol-Kunststoff, Styrol-Acryl-Nitril-Kunststoff, Polyethyleneterephihalat-Kunststoff, glykolmodifizierter Polyethyleneterephathalat-Kunststoff, Polyvinylchlorid-Kunststoff, transparenter Polyolefin-Kunststoff, Acrylnitril-Butadien-Styrol(ABS)-Kunststoff und eine Mischung (Blend) der genannten Kunststoffe, enthaltend einen Fluoreszenzfarbstoff und einer weiteren Schicht (C), ausgewählt aus
(i) einer reflektierenden Schicht (C1), ausgewählt aus der Gruppe umfassend, eine weiße Farbschicht, eine metallische Schicht und eine Spiegelschicht,
(ii) einer Kunststoff-Schicht (C2) bestehend aus einem transparenten, farblosen Kunststoff, welcher mindestens 40% Transmission im sichtbaren Bereich aufweist und
(iii) einer Lackschicht (C3),
wobei die Schichten in der Reihenfolge (A), (B) und (C) verbunden sind und je nach Auswahl der dritten Schicht (C), (C1) direkt auf (B) aufgetragen ist und zwar, auf die der Kunststoffschicht (A) abgewandten Seite, oder (C2) bevorzugt im wesentlichen für das Auge blasenfrei mit (B) durch Verklebung fest verbunden ist oder (C3) direkt auf (B) aufgetragen ist und zwar auf die der Kunststoffschicht (A) abgewandten Seite, wobei im Kunststoffverbund gemäß Ausführungsform (ii) die äußeren Kunststoffschichten (A) und (C2) eine Dicke von mehr als 2 mm aufweisen, und wobei im Kunststoffverbund gemäß Ausführungsform (ii) die mittlere Kunststoffschicht (B) eine Dicke von mehr als 0,2 mm aufweist, und wobei die Kunststoffschichten (A) und (C) dicker sind als die Kunststoffschicht (B).

2. Kunststoffverbund gemäß Anspruch 1, wobei die Kunststoffschichten (A) und (B), im Wesentlichen für das Auge blasenfrei miteinander durch Verklebung fest verbunden sind.

3. Kunststoffverbund gemäß den Ansprüchen 1 oder 2 wobei die Kunststoffschichten (A) und (C2) eine größere Dicke aufweisen als die fluoreszierende Schicht (B), die Kunststoffschichten (A) und (C2) dabei eine Dicke zwischen 2 mm und 3 cm aufweisen, die zweite fluoreszierende Kunststoffschicht (B) eine geringere Dicke zwischen 0,2 mm und 6 mm bevorzugt 3 mm und 6 mm aufweist.

4. Kunststoffverbund nach Anspruch 1 bis 3, wobei die Kunststoffschicht (A) ein hochtransparenter Kunststoff ist mit einer Transmission von mehr als 80%.

5. Kunststoffverbund gemäß einem der Ansprüche 1 bis 4, wobei die Kunststoffschicht (B) einen löslichen Fluoreszenzfarbstoff enthält, der ausgewählt ist aus der Gruppe umfassend einen Fluoreszenzfarbstoff basierend auf der chemischen Klasse der Perylene, Mischungen aus N,N'-disubstituierten Perylen-3,4:9,10 bis (dicarboximid) und gelb fluoreszierenden Farbstoffen, Lumogen^{®} F Orange 240, Lumogen^{®} F Gelb 083, Lumogen^{®} F Rot 240 und Hostasol^{®} Gelb 3G ist.

6. Kunststoffverbund gemäß Anspruch 1 bis 5, wobei die Lackschicht (C3) ausgewählt ist aus der Gruppe umfassend Acryllack, Kunstharzlack, H₂O-löslicher Lack und transparenter Kleber.

7. Kunststoffverbund gemäß Anspruch 1 bis 6, wobei die reflektierende Schicht (C2) eine weiße Farbschicht ist und der weiße Pigmentanteil hoch ist wobei dieser mittels TᵢO₂, ZnO, ZnS oder BaSO₄ herbeigeführt wird.

8. Kunststoffverbund gemäß einem der Ansprüche 1 bis 7, wobei die Kunststoffschicht (B) an wenigstens einer Stelle an der Grenze zur Schicht (C) einen von der übrigen Fläche unterschiedlichen Brechungsindex aufweist und dies z.B. durch Aufrauung oder Aufkratzen der Kunststoffschicht (B) an der Grenze zur Schicht (C) zustande kommt.

9. Verwendung des Kunststoffverbundes nach einem der Ansprüche 1 bis 8 für Fahrzeugkarosserien, Designmöbel, Hinweisschilder oder Teilen davon, Beleuchtungstechnik, Lichtwerbeanlagen, Wintergärten, Aquarien, Möbel und Accessoires, Duschkabinen, Bildverglasung und Architektur.

10. Verwendung nach Anspruch 9 für Möbel und Designermöbel wobei, der Kunststoffverbund so verarbeitet wird, dass die Teile auf Gehrung geschnitten sind.

## Claims

1. Plastic composite, comprising the following layers: a first plastic layer (A) made of a transparent, colourless plastic having a transmittance of at least 40% in the visible range, selected from the group comprising extruded polymethyl methacrylate plastic, cast polymethyl methacrylate plastic, impact-modified polymethyl methacrylate plastic, polycarbonate plastic, polystyrene plastic, styrene-acrylonitrile plastic, polyethylene terephthalate plastic, glycol-modified polyethylene terephthalate plastic, polyvinyl chloride plastic, transparent polyolefin plastic, acrylonitrile-butadiene-styrene (ABS) plastic and a blend of said plastics, a second plastic layer (B) made of a transparent plastic selected from the group comprising extruded polymethyl methacrylate plastic, cast polymethyl methacrylate plastic, impact-modified polymethyl methacrylate plastic, polycarbonate plastic, polystyrene plastic, styrene-acrylonitrile plastic, polyethylene terephthalate plastic, glycol-modified polyethylene terephthalate plastic, polyvinyl chloride plastic, transparent polyolefin plastic, acrylonitrile-butadiene-styrene (ABS) plastic and a blend of said plastics, containing a fluorescent dye, and a further layer (C) selected from
(i) a reflecting layer (C1) selected from the group comprising a white coloured layer, a metallic layer and a mirrored layer,
(ii) a plastic layer (C2) consisting of a transparent, colourless plastic having a transmittance of at least 40% in the visible range, and
(iii) a lacquer layer (C3),
wherein the layers are connected in the order (A), (B) and (C) and, depending on the choice of the third layer (C), (C1) is applied directly to (B), namely to the side remote from the plastic layer (A), or (C2) is preferably securely connected to (B) by adhesive bonding in a manner that is substantially free of bubbles to the naked eye, or (C3) is applied directly to (B), namely to the side remote from the plastic layer (A), wherein in the plastic composite according to embodiment (ii) the outer plastic layers (A) and (C2) have a thickness of more than 2 mm, and wherein in the plastic composite according to embodiment (ii) the middle plastic layer (B) has a thickness of more than 0.2 mm, and wherein the plastic layers (A) and (C) are thicker than the plastic layer (B).

2. Plastic composite according to claim 1, wherein the plastic layers (A) and (B) are securely connected to one another by adhesive bonding in a manner that is substantially free of bubbles to the naked eye.

3. Plastic composite according to claim 1 or 2, wherein the plastic layers (A) and (C2) have a greater thickness than the fluorescent layer (B), the plastic layers (A) and (C2) having a thickness of between 2 mm and 3 cm and the second fluorescent plastic layer (B) having a smaller thickness of between 0.2 mm and 6 mm, preferably 3 mm and 6 mm.

4. Plastic composite according to claims 1 to 3, wherein the plastic layer (A) is a highly transparent plastic having a transmittance of more than 80%.

5. Plastic composite according to one of claims 1 to 4, wherein the plastic layer (B) contains a soluble fluorescent dye selected from the group comprising a fluorescent dye based on the chemical class of the perylenes, mixtures of N,N'-disubstituted perylene-3,4:9,10-bis-(dicarboximide) and yellow fluorescent dyes, Lumogen^{®} F Orange 240, Lumogen^{®} F Yellow 083, Lumogen^{®} F Red 240 and Hostasol^{®} Yellow 3G.

6. Plastic composite according to claims 1 to 5, wherein the lacquer layer (C3) is selected from the group comprising acrylic lacquer, synthetic resin lacquer, H₂O-soluble lacquer and transparent adhesives.

7. Plastic composite according to claims 1 to 6, wherein the reflecting layer (C2) is a white coloured layer and the white pigment proportion is high, this being brought about by means of TiO₂, ZnO, ZnS or BaSO₄.

8. Plastic composite according to one of claims 1 to 7, wherein the plastic layer (B) has at least at one point at the boundary to the layer (C) a refractive index that is different from the rest of the surface area, and this is brought about for example by roughening or scratching the plastic layer (B) at the boundary to the layer (C).

9. Use of the plastic composite according to one of claims 1 to 8 for vehicle bodies, designer furniture, information signs or parts thereof, lighting technology, illuminated advertising units, winter gardens, aquaria, furniture and accessories, shower cubicles, picture framing and architecture.

10. Use according to claim 9 for furniture and designer furniture, wherein the plastic composite is processed in such a way that the parts are mitre-cut.

## Revendications

1. Composé de plastiques, avec les couches mentionnées ci-après, une première couche en matière plastique (A) en une matière plastique transparente incolore qui présente une transmission d'au moins 40 % dans la zone visible, sélectionnée dans le groupe comprenant : polyméthylméthacrylate plastique extrudé, polyméthylméthacrylate plastique coulé, polyméthylméthacrylate plastique à résilience modifiée, polycarbonate plastique, plastique polystyrénique, Styrol-Acryl-Nitril plastique, polyéthylèneterephthalate plastique, polyéthylèneterephthalate plastique modifié au glycol, chlorure de polyvinyle plastique, polyoléfine transparent plastique, Acrylnitril-Butadiène-Styrol (ABS) plastique et un mélange (« blend ») des plastiques susmentionnés, une deuxième couche en matière plastique (B) en une matière plastique transparente sélectionnée dans le groupe comprenant : polyméthylméthacrylate plastique extrudé, polyméthylméthacrylate plastique coulé, polyméthylméthacrylate plastique à résilience modifiée, polycarbonate plastique, plastique polystyrénique, Styrol-Acryl-Nitril plastique, polyéthylèneterephthalate plastique, polyéthylèneterephthalate plastique modifié au glycol, chlorure de polyvinyle plastique, polyoléfine transparent plastique, Acrylnitril-Butadiène-Styrol (ABS) plastique et un mélange (« blend ») des plastiques susmentionnés, contenant un colorant fluorescent ainsi qu'une autre couche (C), sélectionnée parmi
(i) une couche réfléchissante (C1) sélectionnée dans le groupe comprenant une couche de couleur blanche, une couche métallique et une couche miroitée,
(ii) une couche en matière plastique (C2) se composant d'une matière plastique transparente incolore qui présente une transmission d'au moins 40% dans la zone visible et
(iii) une couche de laque (C3),
étant donné que les couches sont reliées dans l'ordre (A), (B) et (C) et, en fonction de la troisième couche (C) sélectionnée, (C1) est appliquée directement sur (B), plus précisément sur la face opposée à la couche en matière plastique (A), ou (C2) est reliée fermement de préférence essentiellement sans soufflures pour l'oeil par collage à (B), ou (C3) est appliquée directement sur (B), plus précisément sur la face opposée à la couche en matière plastique (A), les couches en matière plastique externes (A) et (C2) présentant dans le composé en matière plastique selon la forme de réalisation (ii) une épaisseur de plus de 2 mm, et la couche centrale (B) présentant dans le composé en matière plastique selon la forme de réalisation (ii) une épaisseur de plus de 0,2 mm, et les couches en matière plastique (A) et (C) étant plus épaisses que la couche en matière plastique (B).

2. Composé de plastiques selon la revendication 1, dans lequel les couches en matière plastique (A) et (B) sont reliées fermement par collage l'une à l'autre, essentiellement sans soufflures pour l'oeil.

3. Composé de plastiques selon les revendications 1 ou 2, dans lequel les couches en matière plastique (A) et (C2) présentent une épaisseur supérieure à celle de la couche (B) fluorescente, les couches en matière plastique (A) et (C2) présentant alors une épaisseur entre 2 mm et 3 cm, la deuxième couche en matière plastique (B) fluorescente présentant une épaisseur plus petite entre 0,2 mm et 6 mm, de préférence 3 mm et 6 mm.

4. Composé de plastiques selon la revendication 1 à 3, dans lequel la couche en matière plastique (A) est une matière plastique hautement transparente avec une transmission de plus de 80 %.

5. Composé de plastiques selon l'une quelconque des revendications 1 à 4, dans lequel la couche en matière plastique (B) contient un colorant fluorescent soluble qui est sélectionné dans le groupe comprenant un colorant fluorescent basé sur la classe chimique des pérylènes, mélanges en pérylène-3,4:9,10 bis (dicarboximide) disubstitué N,N' et colorants fluorescents jaunes, Lumogen^{®} F Orange 240, Lumogen^{®} F Jaune 083, Lumogen^{®} F Rouge 240 et Hostasol^{®} Jaune 3G.

6. Composé de plastiques selon la revendication 1 à 5, dans lequel la couche de laque (C3) est sélectionnée dans le groupe comprenant : laque acrylique, laque à base de résine synthétique, laque soluble dans H₂O et colle transparente.

7. Composé de plastiques selon la revendication 1 à 6, dans lequel la couche réfléchissante est une couche de couleur blanche et la proportion de pigments blancs est élevée, cette dernière étant réalisée au moyen de TiO₂, ZnO, ZnS ou BaSO₄.

8. Composé de plastiques selon l'une quelconque des revendications 1 à 7, dans lequel la couche en matière plastique (B) présente au moins à un endroit à la frontière avec la couche (C) un indice de réfraction différent de celui du reste de la surface, et ceci est provoqué par exemple par grainage ou grattage de la couche en matière plastique (B) à la frontière avec la couche (C).

9. Utilisation du composé de plastiques selon l'une quelconque des revendications 1 à 8 pour carrosseries de véhicules, meubles design, écriteaux ou pièces de ces derniers, systèmes techniques d'éclairage, installations lumineuses publicitaires, serres, aquariums, meubles et accessoires, cabines de douche, vitrage de tableaux et architecture.

10. Utilisation selon la revendication 9 pour meubles et meubles design, le composé de plastiques étant traité de manière à ce que les pièces soient coupées en onglets.
